# EUROPÄISCHE PATENTSCHRIFT

(11) **EP 4 513 195 B1**
(45) Veröffentlichungstag und Bekanntmachung des Hinweises auf die Patenterteilung: **02.09.2026**
(21) Anmeldenummer: 24187578.0
(22) Anmeldetag: 10.07.2024
(51) Int. Cl.: G01N 35/04, G01N 1/00, B65D 83/04, B65G 1/04, B65G 47/84

(54) **PROBENGEBER UND ANALYSATOR MIT PROBENGEBER**
SAMPLE DISPENSER AND ANALYZER WITH SAMPLE DISPENSER
DISPOSITIF DE DISTRIBUTION D'ÉCHANTILLONS ET ANALYSEUR DOTÉ D'UN DISPOSITIF DE DISTRIBUTION D'ÉCHANTILLONS

(30) Priorität: 23.08.2023 DE 102023122582
(43) Veröffentlichungstag der Anmeldung: 26.02.2025
(73) Patentinhaber: Analytik Jena GmbH+Co. KG, 07745 Jena (DE)
(72) Erfinder: Freundel, Marcel, 98693 Ilmenau (DE); Traute, Henri-Alan, 98693 Ilmenau (DE); Henneberg, Heiko, 99338 Plaue (DE)
(74) Vertreter: Endress + Hauser Group Services (Deutschland) AG+Co. KG

(56) Entgegenhaltungen:
- EP-B1- 3 578 968
- JP-A- 2022 080 358

## Beschreibung

Die Erfindung betrifft einen Probengeber zum Ausgeben von Proben mit den Merkmalen des Oberbegriffs des ersten Anspruchs. Zudem bezieht sich die Erfindung auf einen Analysator mit mindestens einem Probengeber. Einen gattungsgemäßen Probengeber beschreibt die JP 2022 080358 A.

Im Bereich der Analytik erlauben Probengeber ein automatisiertes Abarbeiten von mehreren Proben, die durch den Probengeber nacheinander einem Analysator zugeführt werden.

Die DE 20 2019 102 011 U1 beschreibt einen Probengeber mit einer Magazinscheibe, die Öffnungen für einzelne Proben aufweist. Eine Scheibe unterhalb der Magazinscheibe verhindert, dass die Proben bedingt durch die Schwerkraft aus den Öffnungen herausgleiten. Die Scheibe verfügt über eine Aussparung, über die eine Probe ausgewählt werden kann. Details der Umsetzung sind nicht offenbart. In der DE 28 18 614 A1 ist ein Probengeber gezeigt, bei dem eine Falltür unterhalb eines Sternrads das Aussondern einer Probe erlaubt. Ähnlich ist die Ausgestaltung der US 2011/0239792 A1. In der DE 36 89 521 T2 wird ein Probengeber mit einem Karussell für die einzelnen Proben beschrieben. Die Winkelposition des Karussells wird durch einen Hall-Sensor erfasst. Der Probengeber gemäß der DE 31 02 774 A1 verfügt über eine Sonde, die Flüssigkeiten aus einem drehbaren Probenvorrat entnimmt. Eine rotierende Probenhalterung offenbart ebenfalls die EP 3 578 968 B1. Darin werden Probenbehälter in Gehäusesitzen durch eine Blockiervorrichtung gehalten. Ein Sensor überwacht, ob sich jeweils ein Behälter in einem Sitz befindet. Die JP 2022 080358 A zeigt einen Probengeber mit zwei rotierenden Tellern, wobei ein Teller die Proben aufnimmt und der andere Teller Aussparungen aufweist.

Eine Problematik von Probengebern besteht meist darin, dass sie häufig einen sehr komplexen und daher prinzipiell eher störanfälligen Aufbau haben.

Der Erfindung liegt die Aufgabe zugrunde, eine einfach aufgebaute Ausgabe von Proben mit der Möglichkeit zum beliebigen Zugriff auf die Proben vorzuschlagen.

Die Erfindung löst die Aufgabe durch einen Probengeber und durch einen Analysator mit einem Probengeber.

Die Erfindung löst die Aufgabe durch einen Probengeber mit den Merkmalen des ersten Anspruchs.

Die Aktivierungsvorrichtung bewirkt, dass jeweils eine Probe aus der Trägervorrichtung durch die Schwerkraft aus ihrer Probenaufnahme herausfällt. Somit kann die Aktivierungsvorrichtung auch als Probenabwurfvorrichtung bezeichnet werden.

Der erfindungsgemäße Probengeber verfügt über eine Basisvorrichtung und eine Trägervorrichtung. Erfindungsgemäß sind die Basisvorrichtung und die Trägervorrichtung voneinander separierbar. Daher kann in der Anwendung die Trägervorrichtung z. B. an einem anderen Ort jeweils mit den Proben bestückt werden, was ein großer Vorteil ist. Die Trägervorrichtung ist dabei beim Bestücken vorzugsweise unten gegenüber dem Herausfallen der Proben verschlossen. Anschließend wird die Trägervorrichtung mit den Proben mit der Basisvorrichtung verbunden, vorzugsweise aufgesteckt oder aufgesetzt.

Die Basisvorrichtung verfügt über eine Ausgabevorrichtung und eine Aktivierungsvorrichtung. Die Ausgabevorrichtung dient der Verbindung z. B. mit einem Analysator. Es handelt sich also um eine Art von Schnittstelle für die Übergabe der Proben. Die Aktivierungsvorrichtung bewirkt, dass jeweils eine ausgewählte Probe von der Trägervorrichtung zu der Ausgabevorrichtung gelangt. Die Trägervorrichtung verfügt über mehrere - also insbesondere mehr als zwei oder beispielsweise 40 - Probenaufnahmen, in die die Proben eingebracht werden, sowie über eine Verschlussvorrichtung. Die Verschlussvorrichtung verschließt - zumindest teilweise und/oder zumindest vorzugsweise in einer (Entnahme-)Richtung - die Probenaufnahmen, sodass die Proben in den Probenaufnahmen gegenüber dem Herausrutschen infolge der einwirkenden Erdanziehung gehalten werden.

Die Aktivierungsvorrichtung ist so ausgestaltet, dass sie auf die Trägervorrichtung und die Verschlussvorrichtung einwirkt. Das Einwirken besteht z. B. darin, dass die Aktivierungsvorrichtung die Trägervorrichtung und/oder die Verschlussvorrichtung bewegt. Das Ziel des Einwirkens auf die Trägervorrichtung und die Verschlussvorrichtung ist, dass eine Probe aus einer ausgewählten Probenaufnahme zu der Ausgabevorrichtung gelangt. Der große Vorteil des erfindungsgemäßen Probengebers besteht darin, dass es mit wenigen Komponenten möglich ist, einzelne Proben auszuwählen, wobei die einfach zur Verfügung stehende Schwerkraft ausgenutzt wird.

Die Aktivierungsvorrichtung bedient sich einer Rotationsbewegungsvorrichtung, die beispielsweise einen Schrittmotor aufweist, und einer Linearbewegungsvorrichtung, um eine Probe von einer ausgewählten Probenaufnahme zu der Ausgabevorrichtung zu bewegen.

Mit der Rotationsbewegungsvorrichtung wird ein Trägerteller, der zu der Trägervorrichtung gehört, um eine Achse gedreht. Dies bewirkt vorzugsweise die Positionierung der ausgewählten Probenaufnahme relativ zu der Ausgabevorrichtung.

In einer Ausgestaltung wird der Trägerteller derartig gedreht, dass sich die ausgewählte Probenaufnahme - vorzugsweise fluchtend - oberhalb der Ausgabevorrichtung befindet.

Die Linearbewegungsvorrichtung bewegt die Verschlussvorrichtung von einer Position zu einer anderen Position. Dadurch wird bewirkt, dass der Verschluss der ausgewählten Probenaufnahme und vorzugsweise nur der einen ausgewählten Probenaufnahme geöffnet wird und dass die Probe die ausgewählte Probenaufnahme verlassen kann. Das Herausgleiten setzt voraus, dass die Schwerkraft sich entsprechend auf die Probe auswirken kann, dass also der Probengeber passend aufgestellt ist. Zwischen den beiden Positionen der Verschlussvorrichtung findet eine lineare Bewegung relativ zu der Achse statt, um welche die Trägervorrichtung gedreht/rotiert wird.

Die Verschlussvorrichtung verfügt über eine tellerartige Grundform. Die beiden Positionen der Verschlussvorrichtung unterscheiden sich darin, ob entweder von allen Probenaufnahmen jeweils eine Seite verschlossen ist (erste Position) oder ob von einer - also von der ausgewählten - Probenaufnahme diese Seite offen ist (zweite Position). Die angesprochene und je nach Position von der Verschlussvorrichtung verschlossene Seite ist vorzugsweise eine - in Richtung der Erdanziehung - untere Seite der Probenaufnahmen, sodass bei geöffneter Seite die jeweilige Probe der Erdanziehung frei folgen kann. Wird also die Verschlussvorrichtung von der ersten in die zweite Position bewegt, so bedeutet dies, dass eine Seite einer Probenaufnahme geöffnet wird. Findet umgekehrt die Bewegung von der zweiten in die erste Position statt, so wird diese Seite der einen Probenaufnahme wieder geschlossen. Die Linearbewegungsvorrichtung führt dabei je nach Ausgestaltung die Bewegung von der ersten zu der zweiten oder von der zweiten zu der ersten Position aus. Alternativ wird die Bewegung zwischen beiden Positionen sowohl hin als auch her bewirkt.

In einer Ausgestaltung sind die Probenaufnahmen auf einem Kreis verteilt und vorzugsweise mit dem gleichen Winkelabstand zueinander angeordnet. Es besteht in dieser Ausgestaltung somit eine Gleichverteilung der Probenaufnahmen um eine gemeinsame Mitte. Die Probenanzahl ist dabei begrenzt durch den Durchmesser des Teils der Trägervorrichtung, der für die Probenaufnahmen zur Verfügung steht, und auch durch die Dimensionierungen der Probenaufnahmen selbst. Ein Vorteil der Anordnung im Kreis besteht darin, dass auch Ausgestaltungen mit wenigen Probenaufnahmen zu realisieren sind und dass die variable Probendosierung leicht und zuverlässig gegeben ist.

In einer ergänzenden Ausgestaltung befinden sich die Probenaufnahmen auf mehreren Kreisen mit unterschiedlichen Radien.

Eine Ausgestaltung des Probengebers besteht darin, dass die Basisvorrichtung ferner ein Gehäuse aufweist, und dass die Ausgabevorrichtung als Aussparung in dem Gehäuse ausgestaltet ist. In dieser Ausgestaltung ist die Ausgabevorrichtung z. B. ein Loch in dem Gehäuse der Basisvorrichtung, durch die jeweils eine Probe beispielsweise unter Einwirkung der Schwerkraft in den zugeordneten Analysator gelangt (also konkret: fällt).

Eine Ausgestaltung des Probengebers besteht darin, dass die Verschlussvorrichtung eine im Wesentlichen geschlossene Fläche aufweist, dass sich mittig in der geschlossenen Fläche eine Mittenaussparung befindet, und dass sich an einem Außenrand der geschlossenen Fläche eine Randaussparung befindet. Die tellerartige Verschlussvorrichtung verfügt in dieser Ausgestaltung über eine geschlossene Fläche, die es zumindest erlaubt, die Probenaufnahmen an einer Seite - vorzugsweise an der Unterseite - zu verschließen. Die geschlossene Fläche wird von zumindest zwei Aussparungen unterbrochen: eine Mittenaussparung und eine Randaussparung. Die Mittenaussparung befindet sich vorzugsweise mittig in der geschlossenen Fläche und erlaubt einen - insbesondere linearen - Wechsel der Position der Verschlussvorrichtung relativ zu der Trägervorrichtung. Um die Mittenaussparung herum befindet sich der vorzugsweise breit ausgestaltete Streifen der geschlossenen Fläche. Auf dem Außenrand der Verschlussvorrichtung gibt es eine Randaussparung, die beispielsweise darin besteht, dass eine in radialer Richtung verlaufende Längstasche vorhanden ist. Wird daher die relative Position von Verschlussvorrichtung und Trägervorrichtung zueinander verändert, so ändert sich auch die Lage zwischen einer Probenaufnahme und der Randaussparung, sodass insbesondere die ausgewählte Probenaufnahme nicht mehr von der Verschlussvorrichtung verschlossen wird und die darin befindliche Probe z. B. herausgleiten kann. Die - vorzugsweise untere - Seite der ausgewählten Probenaufnahme und die Randaussparung fluchten z. B. miteinander, was durch die Drehung der Trägervorrichtung gesteuert wird.

Gemäß einer Ausgestaltung weist der Probengeber ferner ein Federelement auf, wobei das Federelement auf die Verschlussvorrichtung eine Kraft ausübt, die von der zweiten in Richtung der ersten oder von der ersten in Richtung der zweiten Position wirkt. In dieser Ausgestaltung wirken einerseits die Linearbewegungsvorrichtung und andererseits das Federelement auf die Verschlussvorrichtung. Vorzugsweise wirken die Linearbewegungsvorrichtung und das Federelement in unterschiedliche Richtungen.

Erfindungsgemäß ist vorgesehen, dass die Trägervorrichtung eine Achsenvorrichtung aufweist, dass die Basisvorrichtung eine Aufsetzvorrichtung zur Aufnahme der Achsenvorrichtung und eine Detektionsvorrichtung aufweist, und dass die Detektionsvorrichtung derartig ausgestaltet ist, dass die Detektionsvorrichtung erkennt, ob die Trägervorrichtung mit der Achsenvorrichtung auf der Aufsetzvorrichtung aufgesetzt ist. Erfindungsgemäß verfügt die Basisvorrichtung über eine Aufsetzvorrichtung, die vorzugsweise die Achse definiert, um welche die Trägervorrichtung rotiert. Die Aufsetzvorrichtung ist beispielsweise eine drehbare Welle. Auf die Aufsetzvorrichtung wird eine Achsenvorrichtung der Trägervorrichtung aufgesetzt, sodass vorzugsweise die Trägervorrichtung um die Achse gedreht werden kann. Dabei ist eine Detektionsvorrichtung vorhanden, die erkennt, ob die Trägervorrichtung aufgesetzt worden ist. So wird beispielsweise der Probengeber nur dann aktiviert, wenn die Detektionsvorrichtung ein entsprechendes Signal erzeugt, dass die Trägervorrichtung vorhanden ist.

Eine Ausgestaltung des Probengebers besteht darin, dass die Detektionsvorrichtung einen Hall-Sensor aufweist, und dass die Aufsetzvorrichtung eine Magnetkomponente aufweist. In dieser Ausgestaltung wirkt sich z. B. das Aufsetzen der Trägervorrichtung derartig auf die vorzugsweise axial bewegliche Magnetkomponente aus, dass der Hall-Sensor dies erkennt. So bewegt beispielsweise die Kraft, die die Trägervorrichtung beim Aufsetzen auf die Aufsetzvorrichtung ausübt, die Magnetkomponente in Richtung des Hall-Sensors. Der Vorteil eines Hall-Sensors besteht darin, dass seine Empfindlichkeit in der Regel groß genug ist, sodass z. B. eine Edelstahlwelle, um welche die Trägervorrichtung gedreht wird, eine Messung kaum stört.

In einer alternativen Ausgestaltung verfügt die Detektionsvorrichtung über einen Reed-Kontakt.

Eine Ausgestaltung des Probengebers sieht vor, dass die Linearbewegungsvorrichtung und die Verschlussvorrichtung in dem Fall, dass die Trägervorrichtung auf der Basisvorrichtung aufgesetzt ist, über eine Kraftübertragungsvorrichtung miteinander lösbar verbunden sind. Das Positionieren der Trägervorrichtung auf der Basisvorrichtung bewirkt in dieser Ausgestaltung, dass zwischen der Linearbewegungsvorrichtung und der Verschlussvorrichtung eine lösbare Kontaktierung durch eine Kraftübertragungsvorrichtung erzeugt wird. Eine solche lösbare Verbindung ist vorzugsweise erforderlich, weil die Linearbewegungsvorrichtung und die Verschlussvorrichtung den voneinander trennbaren Baueinheiten: Basisvorrichtung bzw. Trägervorrichtung zugeordnet sind, die vorzugsweise nur im Anwendungsfall miteinander verbunden sind.

Eine Ausgestaltung des Probengebers besteht darin, dass die Kraftübertragungsvorrichtung eine Stifteinheit und eine Locheinheit aufweist. In dieser Ausgestaltung wird die Kraftübertragung erzeugt, indem eine Stifteinheit in eine Locheinheit eingreift. Die Art der Kopplung nimmt also in einer Variante insbesondere Rücksicht darauf, dass die Trägervorrichtung auf die Basisvorrichtung aufgesetzt wird.

Eine Ausgestaltung des Probengebers sieht vor, dass die Achsenvorrichtung und/oder die Aufsetzvorrichtung eine Orientierungsvorrichtung aufweist, und dass die Orientierungsvorrichtung ein Aufsetzen der Trägervorrichtung auf der Aufsetzvorrichtung nur in einer Orientierung erlaubt. In dieser Ausgestaltung wird sichergestellt, dass zwischen Achsenvorrichtung und Aufsetzvorrichtung eine vorbekannte Orientierung besteht. Dies ist insbesondere vorteilhaft, wenn die Probenaufnahmen kodiert sind, um die Auswahl der einzelnen Probenaufnahme zu vereinfachen. Daher ist durch die Orientierungsvorrichtung beispielsweise sichergestellt, dass eine Probenaufnahme mit der Nummer "Eins" sich in einem vorbekannten Raumwinkel relativ zur Basisvorrichtung befindet.

In einer Ausgestaltung verfügt die Orientierungsvorrichtung über eine herausragende Struktur (z. B. in der Art einer Rastnase), die in eine Aussparung der Trägervorrichtung eingreift.

Eine Ausgestaltung des Probengebers besteht darin, dass die Linearbewegungsvorrichtung einen Motor - vorzugsweise in Form eines Rotationsmotors oder eines Schrittmotors - und einen Exzenter aufweist. Der Exzenter überträgt in einer Ausgestaltung die rotierende Bewegung des Rotationsmotors in eine lineare Bewegung. In einer Ausgestaltung gehört der Rotationsmotor zu der Rotationsbewegungsvorrichtung und der Exzenter wird nur im Fall der Verschiebung der Verschlussvorrichtung aktiviert. Der Rotationsmotor ist beispielsweise ein DC-Motor. In einer alternativen Ausgestaltung ist ein Schrittmotor direkt mit dem Exzenter verbunden.

Eine Ausgestaltung des Probengebers sieht vor, dass die Rotationsbewegungsvorrichtung einen Drehwinkelsensor - vorzugsweise in Form einer Encoderscheibe - aufweist. Der Drehwinkelsensor dient in dieser Ausgestaltung dafür, dass die ausgewählte Probenaufnahme an der richtigen Stelle - vorzugsweise fluchend oberhalb der Ausgabevorrichtung - steht.

Weiterhin bezieht sich die Erfindung auf einen Analysator mit mindestens einem Probengeber nach einer der vorangehenden oder folgenden Ausgestaltungen. Die vorausgehenden und im Folgenden diskutierten Ausgestaltungen des Probengebers gelten auch für den Analysator und umgekehrt. Daher wird auf eine Wiederholung verzichtet.

Die Erfindung wird anhand der nachfolgenden Figuren näher erläutert.
- Fig. 1: zeigt eine räumliche Darstellung einer Ausgestaltung des Probengebers,
- Fig. 2: zeigt eine räumliche Darstellung der Basisvorrichtung des Probengebers der Fig. 1,
- Fig. 3: zeigt eine schematische Darstellung einer ersten Ausführung der Aktivierungsvorrichtung
- Fig. 4: zeigt schematisch den Bereich um die Aufsetzvorrichtung der Basisvorrichtung,
- Fig. 5: zeigt eine Draufsicht (Fig. 5 a)) sowie einen Schnitt (Fig. 5 b)) durch eine stark vereinfachte schematische Darstellung des Zusammenwirkens zwischen Trägerteller und Verschlussvorrichtung,
- Fig. 6: zeigt eine räumliche Darstellung eines Analysators mit dem Probengeber der Fig. 1 und
- Fig. 7: zeigt schematisch einen seitlichen Blick (Fig. 7 a)) und eine Draufsicht (Fig. 7 b)) auf eine zweite Ausführung der Aktivierungsvorrichtung.

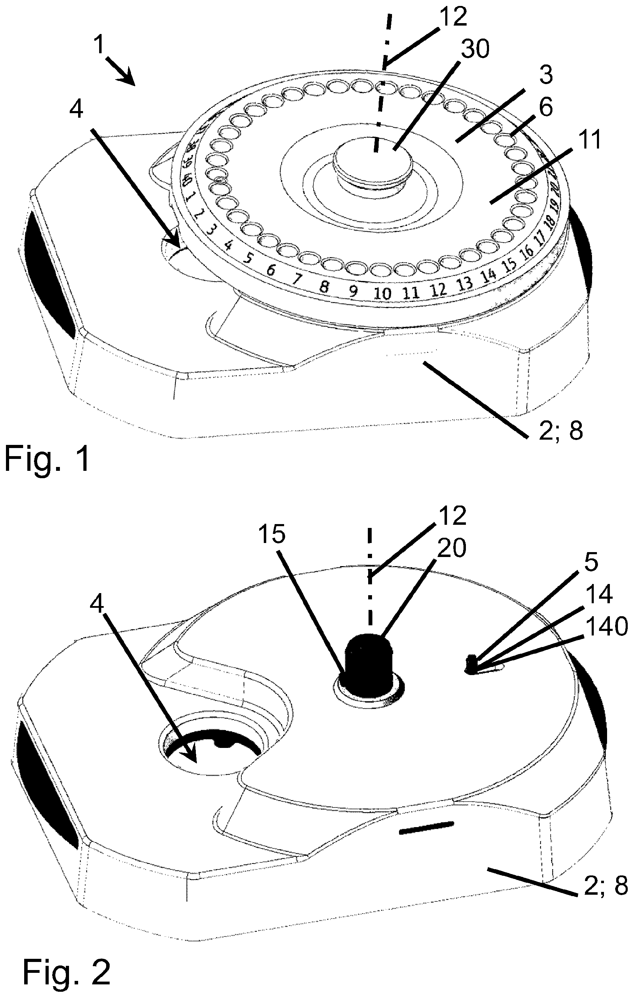

Die Fig. 1 zeigt, wie der Probengeber 1 aus der Basisvorrichtung 2 und der Trägervorrichtung 3 zusammengesetzt ist.

Der tellerförmige Trägerteller 11 der Trägervorrichtung 3 verfügt über mehrere Probenaufnahmen 6, die radial umlaufend verteilt sind und denen hier jeweils eine Nummer zugeordnet ist. Die Trägervorrichtung 3 dreht sich dabei in der Anwendung um die Achse 12, die durch die domartige Achsenvorrichtung 30 in der Mitte der Trägervorrichtung 3 verläuft. Das Gehäuse 8 der Basisvorrichtung 2 verfügt über eine durchgehende Aussparung, die als Ausgabevorrichtung 4 für die Proben in dem Trägerteller 11 dient.

Die Fig. 2 zeigt die Basisvorrichtung 2 ohne die Trägervorrichtung 3.

Die Oberseite des Gehäuses 8 weist eine plane Fläche auf. Zu erkennen ist die Orientierungsvorrichtung 15, die sich an die säulenförmige Aufsetzvorrichtung 20 anschließt und auf der die Trägervorrichtung 3 zur Auflage kommt. Dadurch stellt sich zur Oberseite des Gehäuses 8 ein gewisser Abstand ein. Auf einer (hier links dargestellten) Seite befindet sich eine Aussparung in der erhöhten Auflagefläche für die Trägervorrichtung 3, wobei diese Aussparung in die als durchgehendes Loch ausgestaltete Ausgabevorrichtung 4 übergeht.

Mittig in der Auflagefläche befindet sich die kreiszylindrische Aufsetzvorrichtung 20, auf der die Achsenvorrichtung 30 der Trägervorrichtung 3 im Anwendungsfall ruht. Durch die Aufsetzvorrichtung 20 verläuft auch die Achse 12, um die die Rotation der Trägervorrichtung 3 vorgenommen werden. Fluchtend hinter der Ausgabevorrichtung 4 befindet sich auf der Aufsetzvorrichtung 20, die als Rastnase ausgestaltete Orientierungsvorrichtung 15, die dafür sorgt, dass die Trägervorrichtung 3 mit einer Grundorientierung aufgesetzt wird.

Hier ebenfalls fluchtend mit der Ausgabevorrichtung 4 befindet sich die Kraftübertragungsvorrichtung 14, die hier über eine Stifteinheit 140 verfügt. Die Stifteinheit 140 greift im Anwendungsfall in eine Locheinheit 141 ein. Die Kraftübertragungsvorrichtung 14 gehört dabei zur Aktivierungsvorrichtung 5 und bewirkt vor allem das Herausgleiten der Probe aus der ausgesuchten Probenaufnahme.

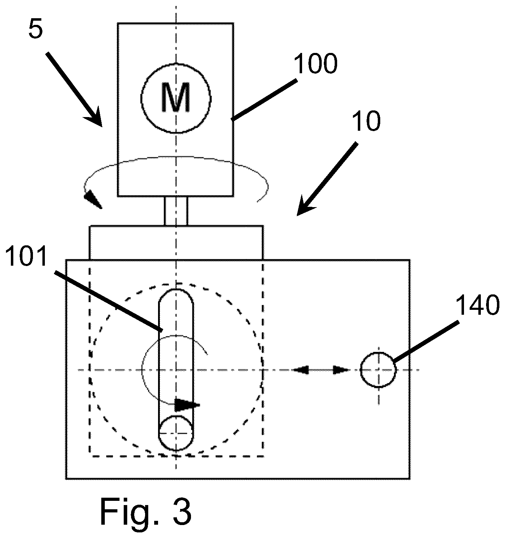

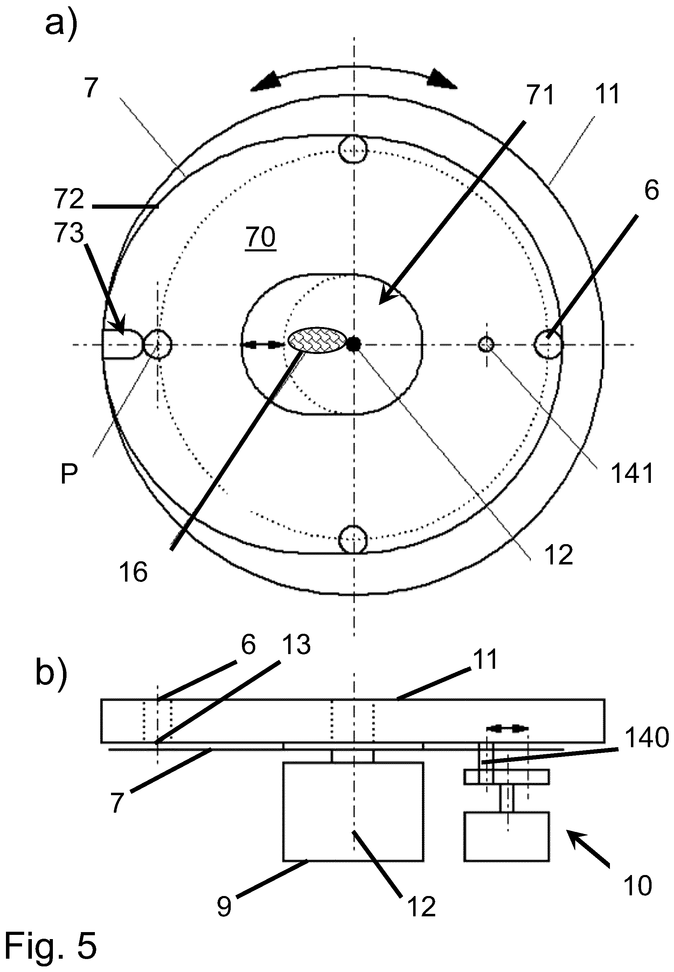

Die Fig. 3 zeigt schematisch den Aufbau der Linearbewegungsvorrichtung 10 als Teil der Aktivierungsvorrichtung 5. Dabei wird die Stifteinheit 140 durch das Zusammenwirken aus der Drehbewegung des hier als Rotationsmotor ausgeführten Motors 100 mit dem Exzenter 101 linear verschoben. Die Stifteinheit 140 verschiebt dadurch die Verschlussvorrichtung 7 (vgl. Fig. 5).

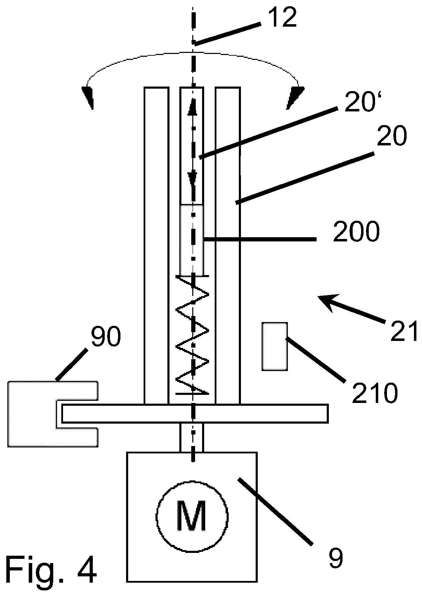

Die Fig. 4 zeigt das Prinzip, wie erkannt wird, ob auf der Basisvorrichtung 2 die Trägervorrichtung 3 aufgesetzt ist.

Die Achsenvorrichtung 30 ruht auf der als Welle ausgeführten Aufsetzvorrichtung 20 und auf der Orientierungsvorrichtung 15. Dabei umgibt sie deren oberes Ende (vgl. Fig. 1). Dadurch drückt sie den oberen Stößel 20' und darunter die bewegliche Magnetkomponente 200 entgegen der Feder entlang der Achse 12 nach unten, um die sich der Trägerteller 11 dreht (angedeutet durch den Doppelpfeil). Dies führt dazu, dass der Hall-Sensor 210 als weitere Komponente der Detektionsvorrichtung 21 ein Signal erzeugt, welches bedeutet, dass der Probengeber bestückt und einsatzfähig ist. Das Signal wird dabei von einer - hier nicht dargestellten - Steuereinheit empfangen, die auch den Probengeber oder hier z. B. auch die Rotationsbewegungsvorrichtung 9 steuert. Für die Steuerung der Drehungen der Trägervorrichtung 3, sodass die ausgewählte Probenaufnahme 6 vorzugsweise fluchtend oberhalb der Ausgabevorrichtung 4 angeordnet ist, ist in dem Beispiel eine Encoderscheibe als Drehwinkelsensor 90 vorhanden.

Bei der Anwendung wird also die Trägervorrichtung 3 mit den Proben in den Probenaufnahmen 6, die durch die Verschlussvorrichtung 7 auf der unteren Seite verschlossen sind, auf die Basisvorrichtung 2 aufgesetzt. Das Ergebnis des Aufsetzens wird erkannt und es werden die jeweils erforderlichen Probenaufnahmen 6 zur passenden Position oberhalb der Ausgabevorrichtung 4 hingedreht. Dann wird die Verschlussvorrichtung 7 linear bewegt, sodass genau die eine gewünschte Probenaufnahme 6 ihre Probe freigeben kann.

Den Vorgang der Auswahl und der Freigabe einer Probe erläutern schematisch die Draufsicht sowie der Schnitt der Fig. 5 a) und b), welche beide gemeinsam besprochen werden.

Im gezeigten Beispiel seien nur vier Probenaufnahmen 6 als durchgehende Bohrungen auf bzw. in dem Trägerteller 11 vorhanden. Die Probe P, die nächstfolgend im Analysator untersucht werden soll, ist hier auf der linken Seite vorhanden. Der Doppelpfeil deutet an, dass der Trägerteller 11 von der Rotationsbewegungsvorrichtung 9 in zwei Richtungen um die Achse 12 herum, gedreht werden kann.

Unterhalb des Trägertellers 11 befindet sich die Verschlussvorrichtung 7, die ein Bestandteil der Trägervorrichtung 3 ist. Die Verschlussvorrichtung 7 verfügt über eine weitgehend geschlossene Fläche 70, die sich zumindest über einen umlaufenden Streifen erstreckt, sodass die Probenaufnahmen 6 in der hier dargestellten ersten Position relativ zur Achse 12 auf ihrer Unterseite 13 verschlossen und die darin befindlichen Proben am Herabrutschen gehindert sind.

In der dargestellten Ausgestaltung ist die Mittenaussparung 71 oval ausgeführt. Die Mittenaussparung 71 ist so groß ausgeführt, dass eine lineare Bewegung senkrecht zur Achse 12 dazu führt, dass die Randaussparung 73 genau eine Probenaufnahme 6 - also hier die linke - freigeben kann. Die Randaussparung 73 ist ein, von dem Außenrand 72 nach innen ragendes, Loch. Befindet sich die Randaussparung 73 fluchtend unterhalb der ausgewählten Probenaufnahme 6, so kann die Probe P nach unten fallen.

Der Randaussparung 73 diametral gegenüber befindet sich auf der Verschlussvorrichtung 7 die Locheinheit 141, die mit der darunter befindlichen Stifteinheit 140 zusammenwirkt. Dabei gelangt durch das Aufsetzen der Trägervorrichtung 3 auf die Basisvorrichtung 2 die Stifteinheit 140 in die Locheinheit 141 der Verschlussvorrichtung 7, sodass die Freigabe der jeweils ausgewählten Probenaufnahme 6 möglich ist.

Die Linearbewegungsvorrichtung 10 kann daher, wie durch den geraden Doppelpfeil angedeutet, die Verschlussvorrichtung 7 in die zweite Position bewegen. Das Rückstellen von der zweiten in die erste Position übernimmt in der dargestellten Ausgestaltung eine Federelement 16.

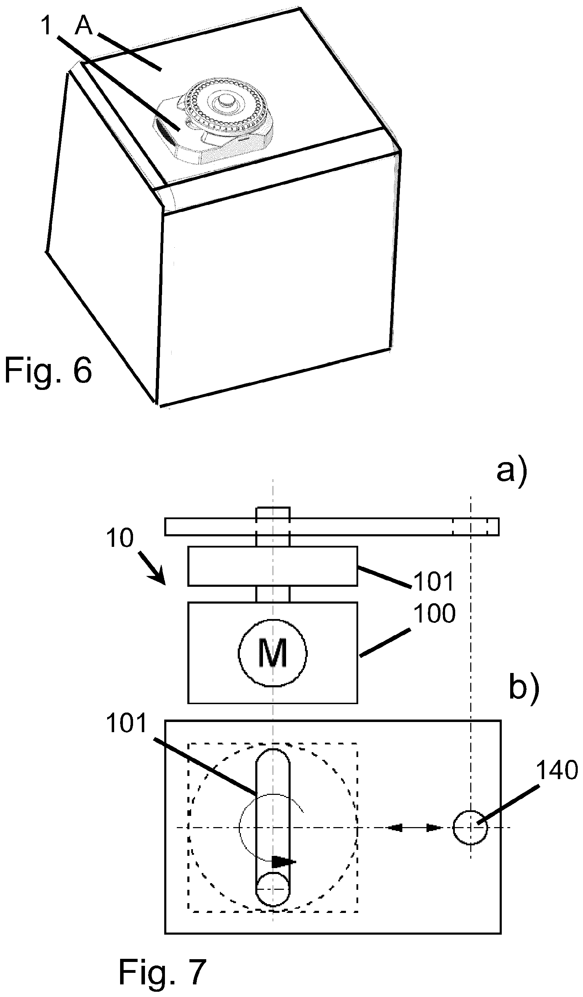

Die Fig. 6 zeigt einen Analysator A, auf dem der Probengeber 1 aufgesetzt ist. Dabei befindet sich beispielsweise unterhalb der Ausgabevorrichtung ein Ofen, in welchem die Probe für die weitere Analyse verbrannt wird.

Die Fig. 7 zeigt schematisch eine zweite Realisierung der Linearbewegungsvorrichtung 10: einmal von der Seite bzw. im Schnitt, Fig. 7 a), und einmal in der Draufsicht, Fig. 7 b). Der Motor 100 der Linearbewegungsvorrichtung 10 ist hier als Schrittmotor realisiert, der direkt mit einem Exzenter 101 verbunden ist. Der Exzenter 101 bewegt den plattenartigen Träger, auf dem sich die Stifteinheit 140 befindet (angedeutet durch den geraden Doppelpfeil). Die Achse, um die sich der Exzenter 101 drehend bewegt (angedeutet durch den gebogenen Pfeil) steht dabei senkrecht auf der Achse, der entlang die Stifteinheit 140 verschoben wird.

### Bezugszeichenliste

- 1: Probengeber
- 2: Basisvorrichtung
- 3: Trägervorrichtung
- 4: Ausgabevorrichtung
- 5: Aktivierungsvorrichtung
- 6: Probenaufnahme
- 7: Verschlussvorrichtung
- 8: Gehäuse
- 9: Rotationsbewegungsvorrichtung
- 10: Linearbewegungsvorrichtung
- 11: Trägerteller
- 12: Achse
- 13: Seite der Probenaufnahme
- 14: Kraftübertragungsvorrichtung
- 15: Orientierungsvorrichtung
- 16: Federelement
- 20: Aufsetzvorrichtung der Basisvorrichtung
- 20': Stößel
- 21: Detektionsvorrichtung der Basisvorrichtung
- 30: Achsenvorrichtung der Trägervorrichtung
- 70: geschlossene Fläche der Verschlussvorrichtung
- 71: Mittenaussparung der Verschlussvorrichtung
- 72: Außenrand der Verschlussvorrichtung
- 73: Randaussparung des Außenrands
- 90: Drehwinkelsensor
- 100: Motor
- 101: Exzenter
- 140: Stifteinheit
- 141: Locheinheit
- 200: Magnetkomponente
- 210: Hall-Sensor
- A: Analysator
- P: Probe

## Patentansprüche

1. Probengeber (1) zum Ausgeben von Proben (P),
mit mindestens einer Basisvorrichtung (2) und einer Trägervorrichtung (3),
wobei die Basisvorrichtung (2) eine Ausgabevorrichtung (4) und eine Aktivierungsvorrichtung (5) aufweist,
wobei die Trägervorrichtung (3) mehrere Probenaufnahmen (6) zum Aufnehmen von Proben (P) und eine Verschlussvorrichtung (7) aufweist,
wobei die Aktivierungsvorrichtung (5) derartig ausgestaltet ist, dass die Aktivierungsvorrichtung (5) die Trägervorrichtung (3) und die Verschlussvorrichtung (7) derartig steuert, dass eine Probe (P) aus einer ausgewählten Probenaufnahme (6) zu der Ausgabevorrichtung (4) gelangt,
wobei die Aktivierungsvorrichtung (5) eine Rotationsbewegungsvorrichtung (9) und eine Linearbewegungsvorrichtung (10) aufweist,
wobei die Trägervorrichtung (3) einen Trägerteller (11) und die Verschlussvorrichtung (7) aufweist,
wobei die Probenaufnahmen (6) durchgehende Aussparungen sind,
wobei die Rotationsbewegungsvorrichtung (9) den Trägerteller (11) um eine Achse (12) dreht,
wobei die Verschlussvorrichtung (7) tellerartig ausgestaltet ist,
wobei die Verschlussvorrichtung (7) relativ zu der Achse (12) - vorzugsweise linear - beweglich ausgestaltet ist,
wobei die Verschlussvorrichtung (7) in einer ersten relativen Position zu der Achse (12) jeweils eine Seite (13) der Probenaufnahmen (6) verschließt,
wobei die Verschlussvorrichtung (7) in einer zweiten relativen Position zu der Achse (12) die Seite (13) genau einer Probenaufnahme (6) offen lässt, und
wobei die Linearbewegungsvorrichtung (10) die Verschlussvorrichtung (7) von der ersten zu der zweiten und/oder von der zweiten zu der ersten Position bewegt,
**dadurch gekennzeichnet,**
**dass** die Basisvorrichtung (2) und die Trägervorrichtung (3) voneinander separierbar sind,
**dass** die Trägervorrichtung (3) eine Achsenvorrichtung (30) aufweist,
**dass** die Basisvorrichtung (2) eine Aufsetzvorrichtung (20) zur Aufnahme der Achsenvorrichtung (30) und eine Detektionsvorrichtung (21) aufweist, und
**dass** die Detektionsvorrichtung (21) derartig ausgestaltet ist, dass die Detektionsvorrichtung (21) erkennt, ob die Trägervorrichtung (3) mit der Achsenvorrichtung (30) auf der Aufsetzvorrichtung (20) aufgesetzt ist.

2. Probengeber (1) nach Anspruch 1,
wobei die Basisvorrichtung (2) ferner ein Gehäuse (8) aufweist, und
wobei die Ausgabevorrichtung (4) als Aussparung in dem Gehäuse (8) ausgestaltet ist.

3. Probengeber (1) nach Anspruch 1 oder 2,
wobei die Verschlussvorrichtung (7) eine im Wesentlichen geschlossene Fläche (70) aufweist,
wobei sich mittig in der geschlossenen Fläche (70) eine Mittenaussparung (71) befindet, und
wobei sich an einem Außenrand (72) der geschlossenen Fläche (70) eine Randaussparung (73) befindet.

4. Probengeber (1) nach einem der Ansprüche 1 bis 3,
wobei der Probengeber (1) ferner ein Federelement (16) aufweist, und
wobei das Federelement (16) auf die Verschlussvorrichtung (7) eine Kraft ausübt, die von der zweiten in Richtung der ersten oder von der ersten in Richtung der zweiten Position wirkt.

5. Probengeber (1) nach einem der Ansprüche 1 bis 4,
wobei die Detektionsvorrichtung (21) einen Hall-Sensor (210) aufweist, und
wobei die Aufsetzvorrichtung (20) eine Magnetkomponente (200) aufweist.

6. Probengeber (1) nach einem der Ansprüche 1 bis 5,
wobei die Linearbewegungsvorrichtung (10) und die Verschlussvorrichtung (7) in dem Fall, dass die Trägervorrichtung (3) auf der Basisvorrichtung (2) aufgesetzt ist, über eine Kraftübertragungsvorrichtung (14) miteinander lösbar verbunden sind.

7. Probengeber (1) nach Anspruch 6,
wobei die Kraftübertragungsvorrichtung (14) eine Stifteinheit (140) und eine Locheinheit (141) aufweist.

8. Probengeber (1) nach einem der Ansprüche 1 bis 7,
wobei die Achsenvorrichtung (30) und/oder die Aufsetzvorrichtung (20) eine Orientierungsvorrichtung (16) aufweist, und
wobei die Orientierungsvorrichtung (16) ein Aufsetzen der Trägervorrichtung (3) auf der Aufsetzvorrichtung (20) nur in einer Orientierung erlaubt.

9. Probengeber (1) nach einem der Ansprüche 1 bis 8,
wobei die Linearbewegungsvorrichtung (10) einen Motor (100) - vorzugsweise in Form eines Rotationsmotors oder eines Schrittmotors - und einen Exzenter (101) aufweist.

10. Probengeber (1) nach einem der Ansprüche 1 bis 9,
wobei die Rotationsbewegungsvorrichtung (9) einen Drehwinkelsensor (90) - vorzugsweise in Form einer Encoderscheibe - aufweist.

11. Analysator (A) mit mindestens einem Probengeber (1) nach einem der Ansprüche 1 bis 10.

## Claims

1. A sample dispenser (1) for dispensing samples (P),
with at least one base device (2) and a carrier device (3),
wherein the base device (2) comprises a dispensing device (4) and an activation device (5),
wherein the carrier device (3) comprises a plurality of sample receptacles (6) for receiving samples (P) and a closing device (7),
wherein the activation device (5) is designed such that the activation device (5) controls the carrier device (3) and the closing device (7) in such a way that a sample (P) is conveyed from a selected sample receptacle (6) to the dispensing device (4),
wherein the activation device (5) comprises a rotation movement device (9) and a linear movement device (10),
wherein the carrier device (3) comprises a carrier plate (11) and the closing device (7),
wherein the sample receptacles (6) are continuous openings,
wherein the rotation movement device (9) rotates the carrier plate (11) about an axis (12),
wherein the closing device (7) is designed in the form of a plate,
wherein the closing device (7) is designed to be movable relative to the axis (12) - preferably linearly -
wherein, in a first relative position with respect to the axis (12), the closing device (7) closes one side (13) of each of the sample receptacles (6),
wherein, in a second relative position with respect to the axis (12), the closing device (7) leaves the side (13) of exactly one sample receptacle (6) open,
and wherein the linear movement device (10) moves the closing device (7) from the first to the second position and/or from the second to the first position,
**characterized in that**
the base device (2) and the carrier device (3) are separable from one another,
that the carrier device (3) comprises an axis device (30),
that the base device (2) comprises a mounting device (20) for receiving the axis device (30) and a detection device (21),
and that the detection device (21) is designed such that the detection device (21) detects whether the carrier device (3) with the axis device (30) is mounted on the mounting device (20).

2. The sample dispenser (1) according to claim 1,
wherein the base device (2) further comprises a housing (8),
and wherein the dispensing device (4) is designed as a recess in the housing (8).

3. The sample dispenser (1) according to claim 1 or 2,
wherein the closing device (7) comprises a substantially closed surface (70),
wherein a central recess (71) is arranged in the center of the closed surface (70),
and wherein an edge recess (73) is arranged on an outer edge (72) of the closed surface (70).

4. The sample dispenser (1) according to any one of claims 1 to 3,
wherein the sample dispenser (1) further comprises a spring element (16),
and wherein the spring element (16) exerts a force on the closing device (7), which force acts from the second towards the first position or from the first towards the second position.

5. The sample dispenser (1) according to any one of claims 1 to 4,
wherein the detection device (21) comprises a Hall sensor (210),
and wherein the mounting device (20) comprises a magnetic component (200).

6. The sample dispenser (1) according to any one of claims 1 to 5,
wherein the linear movement device (10) and the closing device (7), in the event that the carrier device (3) is mounted on the base device (2), are releasably connected to one another via a force transmission device (14).

7. The sample dispenser (1) according to claim 6,
wherein the force transmission device (14) comprises a pin unit (140) and a hole unit (141).

8. The sample dispenser (1) according to any one of claims 1 to 7,
wherein the axis device (30) and/or the mounting device (20) comprises an orientation device (16),
and wherein the orientation device (16) allows the carrier device (3) to be mounted on the mounting device (20) only in one orientation.

9. The sample dispenser (1) according to any one of claims 1 to 8,
wherein the linear movement device (10) comprises a motor (100)-preferably in the form of a rotary motor or a stepper motor-and an eccentric (101).

10. The sample dispenser (1) according to any one of claims 1 to 9,
wherein the rotation movement device (9) comprises a rotational angle sensor (90)-preferably in the form of an encoder disk.

11. An analyzer (A) comprising at least one sample dispenser (1) according to any one of claims 1 to 10.

## Revendications

1. Dispositif distributeur d'échantillons (1) pour la distribution d'échantillons (P),
avec au moins un dispositif de base (2) et un dispositif support (3),
le dispositif de base (2) comprenant un dispositif de distribution (4) et un dispositif d'activation (5),
le dispositif support (3) comprenant une pluralité de logements d'échantillons (6) destinés à recevoir des échantillons (P) ainsi qu'un dispositif d'obturation (7),
le dispositif d'activation (5) étant configuré de telle sorte qu'il commande le dispositif support (3) et le dispositif d'obturation (7) de manière à ce qu'un échantillon (P) soit amené depuis un logement d'échantillon (6) sélectionné vers le dispositif de distribution (4),
le dispositif d'activation (5) comprenant un dispositif de mouvement de rotation (9) et un dispositif de mouvement linéaire (10),
le dispositif support (3) comprenant un plateau support (11) et le dispositif d'obturation (7),
les logements d'échantillons (6) étant des ouvertures traversantes,
le dispositif de mouvement de rotation (9) faisant tourner le plateau support (11) autour d'un axe (12),
le dispositif d'obturation (7) étant réalisé sous forme de plateau,
le dispositif d'obturation (7) étant monté mobile par rapport à l'axe (12) - de préférence de manière linéaire -
dans une première position relative par rapport à l'axe (12), le dispositif d'obturation (7) fermant un côté (13) de chacun des logements d'échantillons (6),
dans une seconde position relative par rapport à l'axe (12), le dispositif d'obturation (7) laissant ouvert le côté (13) d'un seul logement d'échantillon (6),
et le dispositif de mouvement linéaire (10) déplaçant le dispositif d'obturation (7) de la première vers la seconde position et/ou de la seconde vers la première position,
**caractérisé en ce que**
le dispositif de base (2) et le dispositif support (3) sont séparables l'un de l'autre,
le dispositif support (3) comprend un dispositif d'axe (30),
le dispositif de base (2) comprend un dispositif de mise en place (20) destiné à recevoir le dispositif d'axe (30) ainsi qu'un dispositif de détection (21),
et le dispositif de détection (21) est configuré de manière à détecter si le dispositif support (3), muni du dispositif d'axe (30), est positionné sur le dispositif de mise en place (20).

2. Dispositif distributeur d'échantillons (1) selon la revendication 1,
le dispositif de base (2) comprenant en outre un boîtier (8),
et le dispositif de distribution (4) étant réalisé sous forme d'évidement dans le boîtier (8).

3. Dispositif distributeur d'échantillons (1) selon la revendication 1 ou 2,
le dispositif d'obturation (7) comprenant une surface essentiellement fermée (70),
une ouverture centrale (71) étant disposée au centre de ladite surface fermée (70),
et une ouverture périphérique (73) étant disposée sur un bord extérieur (72) de ladite surface fermée (70).

4. Dispositif distributeur d'échantillons (1) selon l'une quelconque des revendications 1 à 3,
le dispositif distributeur (1) comprenant en outre un élément élastique (16),
l'élément élastique (16) exerçant sur le dispositif d'obturation (7) une force agissant de la seconde vers la première position ou de la première vers la seconde position.

5. Dispositif distributeur d'échantillons (1) selon l'une quelconque des revendications 1 à 4,
le dispositif de détection (21) comprenant un capteur à effet Hall (210),
et le dispositif de mise en place (20) comprenant un élément magnétique (200).

6. Dispositif distributeur d'échantillons (1) selon l'une quelconque des revendications 1 à 5,
le dispositif de mouvement linéaire (10) et le dispositif d'obturation (7), lorsque le dispositif support (3) est monté sur le dispositif de base (2), étant reliés de manière amovible l'un à l'autre au moyen d'un dispositif de transmission de force (14).

7. Dispositif distributeur d'échantillons (1) selon la revendication 6,
le dispositif de transmission de force (14) comprenant une unité à broche (140) et une unité à orifice (141).

8. Dispositif distributeur d'échantillons (1) selon l'une quelconque des revendications 1 à 7,
le dispositif d'axe (30) et/ou le dispositif de mise en place (20) comprenant un dispositif d'orientation (16),
le dispositif d'orientation (16) permettant la mise en place du dispositif support (3) sur le dispositif de mise en place (20) uniquement dans une orientation déterminée.

9. Dispositif distributeur d'échantillons (1) selon l'une quelconque des revendications 1 à 8,
le dispositif de mouvement linéaire (10) comprenant un moteur (100) - de préférence sous forme de moteur rotatif ou de moteur pas à pas - et un excentrique (101).

10. Dispositif distributeur d'échantillons (1) selon l'une quelconque des revendications 1 à 9,
le dispositif de mouvement de rotation (9) comprenant un capteur d'angle de rotation (90) - de préférence sous forme de disque codeur.

11. Analyseur (A) comprenant au moins un dispositif distributeur d'échantillons (1) selon l'une quelconque des revendications 1 à 10.
